# FASCICULE DE BREVET EUROPEEN

(11) **EP 3 902 854 B1**
(45) Date de publication et mention de la délivrance du brevet: **15.10.2025**
(21) Numéro de dépôt: 19832704.1
(22) Date de dépôt: 24.12.2019
(51) Int. Cl.: C08F 212/12, C08F 297/04, B60C 1/00, C08L 53/02

(54) **COMPOSITION POLYMÉRIQUE COMPRENANT UN ÉLASTOMÈRE THERMOPLASTIQUE À BLOCS BUTADIÉNIQUES ET STYRÉNIQUES ET UN PLASTIFIANT COMPATIBLE**
POLYMERZUSAMMENSETZUNG MIT EINEM THERMOPLASTISCHEN ELASTOMER MIT BUTADIEN- UND STYROLBLÖCKEN UND EINEM VERTRÄGLICHEN WEICHMACHER
POLYMERIC COMPOSITION COMPRISING A THERMOPLASTIC ELASTOMER WITH BUTADIENE AND STYRENE BLOCKS AND A COMPATIBLE PLASTICISER

(30) Priorité: 26.12.2018 FR 1874183
(43) Date de publication de la demande: 03.11.2021
(73) Titulaire: COMPAGNIE GENERALE DES ETABLISSEMENTS MICHELIN, 63000 Clermont-Ferrand (FR)
(72) Inventeur: ABAD, Mathilde, 63040 CLERMONT-FERRAND CEDEX 09 (FR); COSTE, Nathalie, 63040 CLERMONT-FERRAND CEDEX 09 (FR); ESPY, Guillaume, 63040 CLERMONT-FERRAND CEDEX 09 (FR); DRONET, Séverin, 63040 CLERMONT-FERRAND CEDEX 09 (FR); MAMMERI, Kahina, 63040 CLERMONT-FERRAND CEDEX 09 (FR)
(74) Mandataire: M.F.P. Michelin
(86) Numéro de dépôt international: PCT/EP2019/087008
(87) Numéro de publication internationale: WO 2020/136194

(56) Documents cités:
- CN-A- 106 814 541
- DE-A1- 102016 210 267
- FR-A1- 3 045 615
- JP-A- 2007 332 246

## Description

La présente invention se rapporte à une composition polymérique comprenant un élastomère thermoplastique dont le ou les blocs élastomères sont majoritairement butadiéniques et comprenant en outre des unités issues d'un ou plusieurs monomères styréniques, et dont le ou les blocs thermoplastiques sont styréniques, et un plastifiant sélectif de la phase élastomère diénique.

Dans un pneumatique conventionnel, la bande de roulement comprend généralement majoritairement en poids un ou plusieurs élastomères diéniques.

Un objectif constant des manufacturiers de pneumatiques est d'améliorer l'adhérence des pneumatiques sur sol mouillé. En parallèle, un autre objectif est de diminuer la résistance au roulement des pneumatiques. Cependant, ces deux objectifs sont difficiles à concilier en ce que l'amélioration de l'adhérence suppose d'augmenter les pertes hystérétiques tandis que l'amélioration de la résistance au roulement suppose de baisser les pertes hystérétiques. Il existe donc un compromis de performance à optimiser.

De ce but, les demanderesses ont précédemment développé des compositions pour pneumatiques comprenant un élastomère thermoplastique. Ces pneumatiques présentent un très bon compromis de performance en adhérence et en résistance au roulement.

Par ailleurs, les bandes de roulement en élastomères thermoplastiques ont une mise en œuvre facilitée due à une faible viscosité en température.

Pour perfectionner encore ces pneumatiques, la rigidité à température ambiante des bandes de roulement doit pouvoir être ajustée finement.

Il est connu d'utiliser des plastifiants en combinaison avec des élastomères thermoplastiques pour ajuster la rigidité de la composition. Cependant, ces plastifiants ne sont pas sélectifs de la phase élastomère.

Il peut également être fait mention du document DE 10 2016 210267 qui divulgue un mélange de caoutchouc réticulable au soufre comprenant au moins un caoutchouc diénique, au moins une silice, au moins un plastifiant et au moins un élastomère thermoplastique pouvant être un copolymère tribloc à base de styrène, mais les propriétés obtenues ne sont pas satisfaisantes.

Il est avantageux de disposer de plastifiants sélectifs de la phase élastomère diénique. En effet, ceux-ci permettent de décaler la température de transition vitreuse de la phase élastomère (qui conditionne le positionnement en température du potentiel d'adhérence du matériau) et d'ajuster la rigidité de la composition, sans modifier la température de transition vitreuse de la phase thermoplastique de l'élastomère thermoplastique (qui contrôle la tenue thermique du matériau notamment pour les performances grande vitesse).

Les demanderesses ont découvert que l'utilisation d'un plastifiant spécifique choisi parmi les oligomères de butadiène tel que défini ci-après dans une composition polymérique comprenant un élastomère thermoplastique à blocs comprenant au moins un bloc élastomère et au moins un bloc thermoplastique, le ou les blocs élastomères comprenant majoritairement des unités issues du butadiène et comprenant en outre des unités issues d'un ou plusieurs monomères styréniques, le ou les blocs thermoplastiques étant constitués d'unités issues d'un ou plusieurs monomères styréniques, permettait d'obtenir un effet sélectif du plastifiant dans la phase élastomère.

L'invention a donc pour objet une composition polymérique comprenant
a) au moins un élastomère thermoplastique à blocs comprenant au moins un bloc élastomère et au moins un bloc thermoplastique, le ou les blocs élastomères comprenant majoritairement des unités issues du butadiène et comprenant en outre des unités issues d'un ou plusieurs monomères styréniques, le ou les blocs thermoplastiques étant constitués d'unités issues d'un ou plusieurs monomères styréniques,
b) au moins un plastifiant choisi parmi les oligomères de butadiène, étant entendu que :
   b1) le taux molaire de motif polybutadiène 1,2 dans ledit plastifiant est compris dans un domaine allant de 70% à 130% du taux molaire de motif polybutadiène 1,2 dans le bloc élastomère de l'élastomère thermoplastique, et la masse molaire Mn du plastifiant est supérieure à 2000 g/mol, et inférieure à 50000 g/mol,
      ou bien
   b2) le taux molaire de motif polybutadiène 1,2 dans le plastifiant est inférieur à 70%, ou supérieur à 130% du taux molaire de motif polybutadiène 1,2 dans le bloc élastomère de l'élastomère thermoplastique, et
la masse molaire Mn du plastifiant est supérieure à 5000 g/mol, et inférieure à 50000g.

Dans la présente description, sauf indication expresse différente, tous les pourcentages (%) indiqués sont des pourcentages massiques.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Dans la présente demande, on entend par « partie pour cent d'élastomère » ou « pce », la partie en poids d'un constituant pour 100 parties en poids du ou des élastomères, c'est-à-dire du poids total du ou des élastomères, qu'ils soient thermoplastiques ou non thermoplastiques, de la composition. Ainsi, un constituant à 60 pce signifiera par exemple 60 g de ce constituant pour 100 g d'élastomère.

Par élastomère thermoplastique (TPE), on entend, de manière connue, un polymère comprenant une partie thermoplastique et une partie élastomérique.

Un élastomère thermoplastique est un copolymère constitué d'un ou plusieurs blocs rigides « thermoplastiques » reliés à un ou plusieurs blocs souples « élastomères ».

Ainsi, le ou les élastomères thermoplastiques de la composition polymérique du pneumatique selon l'invention comprennent au moins un bloc élastomère et au moins un bloc thermoplastique.

Typiquement, chacun de ces blocs contient au minimum plus de 5, généralement plus de 10 unités de répétition.

Dans la présente demande, lorsqu'il est fait référence à la température de transition vitreuse d'un élastomère thermoplastique, il s'agit de la température de transition vitreuse relative au bloc élastomère (sauf indication contraire). En effet, de manière connue, les élastomères thermoplastiques non cristallins présentent deux pics de température de transition vitreuse (Tg, mesurée selon ASTM D3418), la température la plus basse étant relative à la partie élastomère de l'élastomère thermoplastique, et la température la plus haute étant relative à la partie thermoplastique de l'élastomère thermoplastique. Ainsi, les blocs souples des élastomères thermoplastiques, dits élastomériques, se définissent généralement par une Tg inférieure ou égale à la température ambiante (25°C), tandis que les blocs rigides dits thermoplastiques ont une Tg supérieure ou égale à 80°C. Pour être de nature à la fois élastomère et thermoplastique, l'élastomère thermoplastique doit être muni de blocs suffisamment incompatibles (c'est-à-dire différents du fait de leur masse, de leur polarité ou de leur Tg respectives) pour conserver leurs propriétés propres de bloc élastomère ou thermoplastique.

Ainsi, le ou les élastomères thermoplastiques utilisables selon l'invention (donc le ou les blocs élastomères des élastomères thermoplastiques) présentent préférentiellement une température de transition vitreuse du ou des blocs élastomérique(s) qui est inférieure ou égale à 25°C, plus préférentiellement inférieure ou égale à 10°C. Une valeur de Tg supérieure à ces minima peut diminuer les performances de la bande de roulement lors d'une utilisation à très basse température ; pour une telle utilisation, la température de transition vitreuse des élastomères thermoplastiques est plus préférentiellement encore inférieure ou égale à - 10°C.

De manière préférentielle également, la température de transition vitreuse des élastomères thermoplastiques utilisables selon l'invention est supérieure à -110°C.

La masse moléculaire moyenne en nombre (notée Mn) des élastomères thermoplastiques est préférentiellement comprise entre 30 000 et 500 000 g/mol, plus préférentiellement comprise entre 40 000 et 400 000 g/mol. En dessous des minima indiqués, la cohésion entre les chaînes d'élastomère des élastomères thermoplastiques, notamment en raison de leur dilution éventuelle (en présence d'une huile d'extension), risque d'être affectée. Par ailleurs, une masse Mn trop élevée peut être pénalisante pour la mise en œuvre. Ainsi, on a constaté qu'une valeur comprise entre 50 000 et 300 000 g/mol était particulièrement bien adaptée à une utilisation des élastomères thermoplastiques dans une bande de roulement de pneumatique.

L'indice de polydispersité (Ip = Mw/Mn avec Mw masse moléculaire moyenne en poids) du ou des élastomères thermoplastiques est de préférence inférieur à 3 ; plus préférentiellement inférieur à 2, et encore plus préférentiellement inférieur à 1,5.

Les élastomères thermoplastiques utilisables selon l'invention peuvent être des copolymères avec un petit nombre de blocs (moins de 5, typiquement 2 ou 3), auquel cas ces blocs ont de préférence des masses élevées, supérieures à 15 000 g/mol.

Les élastomères thermoplastiques peuvent être également des copolymères avec un grand nombre de blocs (plus de 30, typiquement de 50 à 500) plus petits, auquel cas ces blocs ont de préférence des masses peu élevées, par exemple de 500 à 5000 g/mol, ces élastomères thermoplastiques seront appelés élastomères thermoplastiques multiblocs par la suite.

Selon une première variante, les élastomères thermoplastiques utilisables selon l'invention se présentent sous une forme linéaire.

Dans un premier mode particulier de cette première variante, les élastomères thermoplastiques sont des copolymères diblocs : bloc thermoplastique/bloc élastomère.

Dans un deuxième mode particulier de cette première variante, les élastomères thermoplastiques sont des copolymères triblocs : bloc thermoplastique/bloc élastomère/bloc thermoplastique, c'est-à-dire un bloc élastomère central et un bloc thermoplastique terminal à chacune des deux extrémités du bloc élastomère.

Dans un troisième mode particulier de cette première variante, les élastomères thermoplastiques sont constitués d'un enchaînement linéaire alterné de blocs élastomères et de blocs thermoplastiques (élastomères thermoplastiques multiblocs).

Selon une deuxième variante, les élastomères thermoplastiques utilisables selon l'invention se présentent sous une forme étoilée à au moins trois branches.

Par exemple, les élastomères thermoplastiques peuvent alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon une troisième variante, les élastomères thermoplastiques utilisables selon l'invention se présentent sous une forme branchée ou dendrimère. Les élastomères thermoplastiques peuvent alors se composer d'un bloc élastomère branché ou dendrimère et d'un bloc thermoplastique, situé à l'extrémité des branches du bloc élastomère dendrimère.

Comme expliqué précédemment, la composition polymérique selon l'invention comprend au moins un élastomère thermoplastique à blocs comprenant au moins un bloc élastomère et au moins un bloc thermoplastique.

Le ou les blocs élastomères comprennent majoritairement des unités issues du butadiène.

Autrement dit, chaque bloc élastomère comprend au moins 50% en poids, de préférence au moins 70% en poids d'unités issues du butadiène, par rapport au poids dudit bloc élastomère.

Selon l'invention, le ou les blocs élastomères comprennent en outre des unités issues d'un ou plusieurs monomères styréniques.

Le butadiène utilisé pour former le ou les blocs élastomères peut être copolymérisé, de manière statistique, avec au moins un autre monomère de manière à former un bloc élastomère comprenant majoritairement des unités issues du butadiène. La fraction molaire en monomère polymérisé autre que le butadiène, par rapport au nombre total de motifs du bloc élastomère, doit être telle que ce bloc garde ses propriétés d'élastomère. Avantageusement la fraction molaire de cet autre comonomère peut aller de 0 à 50 %, plus préférentiellement de 0 à 45 % et encore plus préférentiellement de 0 à 30 %.

A titre de monomères styréniques utilisables pour le ou les blocs élastomères, on peut citer le styrène, l'o-, m- ou p-méthylstyrène, l'alpha-méthylstyrène, le beta-méthylstyrène, le 2,6-diméthylstyrène, le 2,4-diméthylstyrène, l'alpha-méthyl-o-méthylstyrène, l'alpha-méthyl-m-méthylstyrène, l'alpha-méthyl-p-méthylstyrène, le beta-méthyl-o-méthylstyrène, le beta-méthyl-m-méthylstyrène, le beta-méthyl-p-méthylstyrène, le 2,4,6-triméthylstyrène, l'alpha-méthyl-2,6-diméthylstyrène, l'alpha-méthyl-2,4-diméthylstyrène, le beta-méthyl-2,6-diméthylstyrène, le beta-méthyl-2,4-diméthylstyrène, l'o-, m- ou p-chlorostyrène, le 2,6-dichlorostyrène, le 2,4-dichlorostyrène, l'alpha-chloro-o-chlorostyrène, l'alpha-chloro-m-chlorostyrène, l'alpha-chloro-p-chlorostyrène, le beta-chloro-o-chlorostyrène, le beta-chloro-m-chlorostyrène, le beta-chloro-p-chlorostyrène, le 2,4,6-trichlorostyrène, l'alpha-chloro-2,6-dichlorostyrène, l'alpha-chloro-2,4-dichlorostyrène, le beta-chloro-2,6-dichlorostyrène, le beta-chloro-2,4-dichlorostyrène, l'o-, m- ou p-butylstyrène, l'o-, m- ou p-méthoxystyrène, l'o-, m- ou p-chlorométhylstyrène, l'o-, m- ou p-bromométhylstyrène, les dérivés styrènes substitués par un groupement silyle. Les monomères styréniques préférés sont le styrène et l'alphaméthylstyrène.

De préférence, les unités issues de monomères styréniques dans le ou lesdits blocs élastomères représentent 0 à 50% en poids du bloc élastomère.

Ainsi, le au moins un bloc élastomère peut être un copolymère statistique de type styrène-butadiène (SBR), ce copolymère pouvant être hydrogéné. Ce bloc SBR possède de préférence une Tg (température de transition vitreuse) mesurée par DSC selon la norme ASTM D3418 de 1999, inférieure à 25°C, préférentiellement inférieure à 10°C, plus préférentiellement inférieure à 0°C et très préférentiellement inférieure à -10°C. De manière préférentielle également, la Tg du bloc SBR est supérieure à -100°C. Conviennent notamment, les blocs SBR ayant une Tg comprise entre 20°C et -70°C et plus particulièrement entre 0°C et -50°C. De manière bien connue, le bloc SBR comprend une teneur en styrène, une teneur en unités -1,2 de la partie butadiénique, et une teneur en unités -1,4 de la partie butadiénique, cette dernière se composant d'une teneur en unités trans-1,4 et d'une teneur en unités cis-1,4 lorsque la partie butadiénique n'est pas hydrogénée. De manière préférentielle, on utilise notamment un bloc SBR ayant une teneur en styrène comprise, par exemple dans un domaine allant de 0 à 50 % en poids, de préférence de 0 % à 30 % en poids, et pour la partie butadiénique, une teneur en liaisons -1,2 comprise dans un domaine allant de 0% à 90 % (% molaire), et une teneur en liaisons -1,4 comprise dans un domaine allant de 0% à 90 % (% molaire).

De préférence pour l'invention, les blocs élastomères des élastomères thermoplastiques présentent au total, une masse moléculaire moyenne en nombre (« Mn ») allant de 25 000 g/mol à 350 000 g/mol, de préférence de 35 000 g/mol à 250 000 g/mol de manière à conférer aux élastomères thermoplastiques de bonnes propriétés élastomériques et une tenue mécanique suffisante et compatible avec l'utilisation en pneumatique.

Comme expliqué précédemment, les élastomères thermoplastiques utilisables selon l'invention comprennent également au moins un bloc thermoplastique.

Par bloc thermoplastique, on entend un bloc constitué de monomères polymérisés et ayant une température de transition vitreuse, ou une température de fusion dans le cas des polymères semi-cristallins, supérieure ou égale à 80°C, de préférence variant de 80°C à 250°C, plus préférentiellement variant de 80°C à 200°C, et en particulier variant de 80°C à 180°C.

Lorsque le bloc thermoplastique est un polymère semi-cristallin, on peut observer une température de fusion supérieure à la température de transition vitreuse. Dans ce cas, on prend en compte pour la définition ci-dessus la température de fusion et non pas la température de transition vitreuse.

Le ou les blocs thermoplastiques de l'élastomère thermoplastique utilisé selon l'invention sont constitués d'unités issues d'un ou plusieurs monomères styréniques.

De préférence, le ou les monomères styréniques du ou des blocs thermoplastiques sont choisis parmi le styrène, l'o-, m- ou p-méthylstyrène, l'alpha-méthylstyrène, le beta-méthylstyrène, le 2,6-diméthylstyrène, le 2,4-diméthylstyrène, l'alpha-méthyl-o-méthylstyrène, l'alpha-méthyl-m-méthylstyrène, l'alpha-méthyl-p-méthylstyrène, le beta-méthyl-o-méthylstyrène, le beta-méthyl-m-méthylstyrène, le beta-méthyl-p-méthylstyrène, le 2,4,6-triméthylstyrène, l'alpha-méthyl-2,6-diméthylstyrène, l'alpha-méthyl-2,4-diméthylstyrène, le beta-méthyl-2,6-diméthylstyrène, le beta-méthyl-2,4-diméthylstyrène, l'o-, m- ou p-chlorostyrène, le 2,6-dichlorostyrène, le 2,4-dichlorostyrène, l'alpha-chloro-o-chlorostyrène, l'alpha-chloro-m-chlorostyrène, l'alpha-chloro-p-chlorostyrène, le beta-chloro-o-chlorostyrène, le beta-chloro-m-chlorostyrène, le beta-chloro-p-chlorostyrène, le 2,4,6-trichlorostyrène, l'alpha-chloro-2,6-dichlorostyrène, l'alpha-chloro-2,4-dichlorostyrène, le beta-chloro-2,6-dichlorostyrène, le beta-chloro-2,4-dichlorostyrène, l'o-, m- ou p-butylstyrène, l'o-, m- ou p-méthoxystyrène, l'o-, m- ou p-chlorométhylstyrène, l'o-, m- ou p-bromométhylstyrène, les dérivés styrènes substitués par un groupement silyle.

Selon un mode de réalisation préféré, le ou les blocs thermoplastiques comprennent majoritairement des unités issues du monomère alpha-méthylstyrène.

Autrement dit, selon ce mode de réalisation, chaque bloc thermoplastique comprend au moins 50% en poids, de préférence au moins 70% en poids, d'unités issues du monomère alpha-méthylstyrène.

De préférence encore, le ou les blocs thermoplastiques sont constitués d'unités issues du monomère alpha-méthylstyrène.

De préférence, les blocs thermoplastiques des élastomères thermoplastiques présentent au total, une masse moléculaire moyenne en nombre (« Mn ») allant de 5 000 g/mol à 150 000 g/mol.

Le ou les blocs thermoplastiques sont préférentiellement présents dans des proportions suffisantes pour préserver le caractère thermoplastique des élastomères thermoplastiques utilisables selon l'invention. Le taux minimum de blocs thermoplastiques dans les élastomères thermoplastiques peut varier en fonction des conditions d'utilisation des élastomères thermoplastiques.

D'autre part, la capacité des élastomères thermoplastiques à se déformer lors de la préparation du pneu peut également contribuer à déterminer la proportion des blocs thermoplastiques dans les élastomères thermoplastiques utilisables selon l'invention.

De préférence, le ou les blocs thermoplastiques constitués d'unités issues d'un ou plusieurs monomères styréniques représentent au plus 35 %, de préférence de 10 à 35% en poids, par rapport au poids de l'élastomère thermoplastique.

L'élastomère thermoplastique utilisable dans la composition polymérique du pneumatique selon l'invention représente généralement de 15 à 100 pce de la composition polymérique, de préférence de 50 à 100 pce, plus préférentiellement de 70 à 100 pce.

L'élastomère thermoplastique utilisable dans la composition polymérique selon l'invention peut être préparé par le procédé de synthèse analogue à celui décrit dans le document FR 3 045 615.

La composition polymérique selon l'invention peut également comprendre un ou plusieurs élastomères non thermoplastiques, tels que les élastomères diéniques bien connus de l'homme du métier.

Par élastomère ou caoutchouc « diénique », doit être compris de manière connue un (on entend un ou plusieurs) élastomère issu au moins en partie (i.e. ; un homopolymère ou un copolymère) de monomères diènes (monomères porteurs de deux doubles liaisons carbone carbone, conjuguées ou non).

Par élastomère diénique, doit être compris selon l'invention tout élastomère synthétique issu au moins en partie de monomères diènes. Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques. A titre de diènes conjugués utilisables dans le procédé conforme à l'invention conviennent notamment le butadiène-1,3, le 2-méthyl-1,3-butadiène, les 2,3 di(alcoyle en C1 à C5)-1,3- butadiène tels que par exemple le 2,3-diméthyl-1,3-butadiène, 2,3-diéthyl-1,3-butadiène, 2- méthyl-3-éthyl-1,3-butadiène, le 2-méthyl-3-isopropyl-1,3-butadiène, le phényl-1,3-butadiène, le 1,3-pentadiène, le 2,4 hexadiène, etc...

L'élastomère diénique éventuellement présent de la composition est choisi préférentiellement dans le groupe des élastomères diéniques constitué par les polybutadiènes (en abrégé "BR"), les polyisoprènes (IR) de synthèse, le caoutchouc naturel (NR), les copolymères de butadiène, les copolymères d'isoprène, les copolymères d'éthylène et de diène et les mélanges de ces polymères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les caoutchoucs butyls halogénés ou non, et les copolymères d'éthylène et de butadiène (EBR).

De manière particulièrement préférée, le ou les élastomères thermoplastiques utilisables selon l'invention et décrits précédemment sont les seuls élastomères de la composition polymérique du pneumatique selon l'invention.

Comme expliqué précédemment, la composition polymérique selon l'invention comprend au moins un plastifiant choisi parmi les oligomères de butadiène, étant entendu que :
b1) le taux molaire de motif polybutadiène 1,2 dans ledit plastifiant est compris dans un domaine allant de 70% à 130% du taux molaire de motif polybutadiène 1,2 dans le bloc élastomère de l'élastomère thermoplastique, et
la masse molaire Mn du plastifiant est supérieure à 2000 g/mol, et inférieure à 50000 g/mol, ou bien
b2) le taux molaire de motif polybutadiène 1,2 dans le plastifiant est inférieur à 70%, ou supérieur à 130% du taux molaire de motif polybutadiène 1,2 dans le bloc élastomère de l'élastomère thermoplastique, et
la masse molaire Mn du plastifiant est supérieure à 5000 g/mol, et inférieure à 50000g/mol.

De préférence, le ou les plastifiants représentent de 5 à 50 pce, de préférence de 5 à 30 pce, mieux de 7 à 20 pce.

La composition polymérique selon l'invention peut également comprendre un système de réticulation.

De préférence, le système de réticulation est à base de soufre ou d'un donneur de soufre.

Par l'expression « système de réticulation à base de », il faut entendre que le système de réticulation comporte un mélange et/ou le produit de réaction des différents constituants utilisés dans le système de réticulation, et en particulier le soufre ou le donneur de soufre, certains de ces constituants de base étant susceptibles de, ou destinés à, réagir entre eux ou avec les autres constituants du pneumatique, au moins en partie, lors des différentes phases de fabrication du pneumatique.

Le système de réticulation peut être un système de vulcanisation. Dans ce cas, il est préférentiellement à base de soufre ou à base d'un donneur de soufre et d'un accélérateur de vulcanisation, en particulier un accélérateur primaire de vulcanisation.

Parmi les donneurs de soufre on peut citer par exemple les alkyl phénol disulfures (APDS) tel que par exemple le disulfure de paratertiobutylphénol.

Avantageusement, le taux en soufre ou en donneur de soufre est compris entre 0,2 et 2 pce, de préférence compris entre 0,5 et 1,5 pce, de préférence encore entre 0,5 et 1,4 pce.

On peut utiliser comme accélérateur primaire tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le N-cyclohexyl-2-benzothiazyle sulfénamide (en abrégé « CBS »), N,N-dicyclohexyl-2-benzothiazyle sulfénamide (en abrégé « DCBS »), N-ter-butyl-2-benzothiazyle sulfénamide (en abrégé « TBBS »), N-ter-butyl-2-benzothiazyle sulfénimide (en abrégé « TBSI »), dibenzyldithiocarbamate de zinc (en abrégé « ZBEC ») et les mélanges de ces composés.

De préférence, on utilise un accélérateur primaire du type sulfénamide.

De manière particulièrement préférée, l'accélérateur primaire de vulcanisation est le N-cyclohexyl-2-benzothiazyle sulfénamide (CBS).

Selon un mode de réalisation particulier de l'invention, le taux en accélérateur(s) de vulcanisation varie de 0,2 à 10 pce, de préférence varie de 0,2 à 7 pce, plus préférentiellement de 0,6 à 2 pce.

Avantageusement, le ratio pondéral soufre ou donneur de soufre / accélérateur de vulcanisation varie de 0,25 à 4.

A ce système de vulcanisation viennent optionnellement s'ajouter, divers accélérateurs secondaires ou activateurs de vulcanisation connus tels qu'oxyde de zinc, acide stéarique, dérivés guanidiques (en particulier diphénylguanidine), etc.

La composition polymérique selon l'invention peut également comprendre une charge renforçante.

En particulier, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTI), comme par exemple les noirs N115, N134, N234, N326, N330, N339, N347, N375, ou encore, selon les applications visées, les noirs de séries plus élevées (par exemple N660, N683, N772), voire même N990.

Par « charge inorganique renforçante », doit être entendu dans la présente demande, par définition, toute charge inorganique ou minérale (quelles que soient sa couleur et son origine (naturelle ou de synthèse), encore appelée charge « blanche », charge « claire » voire « charge non noire » (« non-black filler ») par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceux, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites « HDS »), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/16837.

Pour coupler la charge inorganique renforçante à l'élastomère, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

Le taux volumique de charge renforçante, optionnelle, dans la composition polymérique (noir de carbone et/ou charge inorganique renforçante telle que silice) est compris dans un domaine allant de 0 à 30 %, ce qui correspond environ à un taux de 0 à 100 pce pour une composition polymérique sans plastifiant. Préférentiellement la composition polymérique selon l'invention comprend moins de 30 pce de charge renforçante et plus préférentiellement moins de 10 pce.

Selon une variante préférentielle de l'invention, la composition polymérique ne contient pas de charge renforçante.

De la même manière, la composition polymérique selon l'invention peut contenir une ou plusieurs charges micrométriques, inertes telles que les charges lamellaires connues de l'homme de l'art.

De préférence, la composition polymérique selon l'invention ne contient pas de charge micrométrique.

Outre les élastomères précédemment décrits, la composition de la composition polymérique pourrait aussi comporter, toujours selon une fraction pondérale minoritaire par rapport aux élastomères thermoplastiques, des polymères autres que des élastomères, tels que par exemple des polymères thermoplastiques. Lorsqu'ils sont présents dans la composition polymérique, on préfère que le taux total de polymères thermoplastiques non élastomériques soit inférieur à 40 pce, préférentiellement compris entre 5 et 30 pce, et plus préférentiellement compris entre 10 et 25 pce.

L'invention a encore pour objet un pneumatique comprenant une composition polymérique telle que définie précédemment.

### Exemples

Détermination de la distribution de masses molaires par SEC RI équivalent PS

Elle est déterminée par chromatographie d'exclusion stérique (SEC) en équivalent polystyrène. La SEC permet de séparer les macromolécules en solution suivant leur taille à travers des colonnes remplies d'un gel poreux. Les macromolécules sont séparées suivant leur volume hydrodynamique, les plus volumineuses étant éluées en premier. Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité ou polydispersité (Ip = Mw/Mn) calculé via un étalonnage dit de MOORE.

Préparation du polymère: Il n'y a pas de traitement particulier de l'échantillon de polymère avant analyse. Celui-ci est simplement solubilisé dans du chloroforme, à une concentration d'environ 2 g/l. Puis la solution est filtrée sur filtre de porosité 0,45µm avant injection.

Analyse SEC: L'appareillage utilisé est un chromatographe « Agilent 1200 ». Le solvant d'élution est du chloroforme. Le débit est de 1 ml/min, la température du système de 30°C et la durée d'analyse de 30 min. On utilise un jeu de trois colonnes Agilent en série précédées d'un filtre, de dénominations commerciales « PLgel 10 µm (précolonne)» et deux « PLgel 10 µm mixed B». Le volume injecté de la solution de l'échantillon de polymère est 100 µl. Le détecteur est un réfractomètre différentiel « Agilent 1200 » et le logiciel d'exploitation des données chromatographiques est le système «Chemstation». Les masses molaires moyennes calculées sont relatives à une courbe d'étalonnage réalisée à partir de polystyrènes étalons commerciaux « Agilent-KIT PS ».

Résonnance magnétique nucléaire du proton (RMN 1H) :
Les déterminations des taux des différentes unités monomères et de leurs microstructures au sein du copolymère sont réalisées par une analyse RMN. Les spectres sont acquis sur un spectromètre 500MHz BRUKER équipé d'une sonde "Broad Band" BBIz-grad 5mm. L'expérience RMN 1H quantitative, utilise une séquence simple d'impulsion 30° et un délai de répétition de 5 secondes entre chaque acquisition. Les échantillons sont solubilisés dans le CDCl3. Les zones d'intégration considérées pour la quantification sont les zones de signatures spectrales des unités monomères connues de l'homme de l'art

### Analyse calorimétrique différentielle (DSC) :

### Mesure de la Tg des copolymères

La caractérisation des Tg du bloc élastomère et des blocs polyalphaméthylstyrène est réalisée par une mesure DSC (appareil DSC1 de chez Mettler Toledo). L'appareil est en fonctionnement sous atmosphère Hélium. Un prélèvement de 10 à 20 mg d'élastomère TPE est déposé dans un creusé utilisé classiquement par l'homme de l'art pour réaliser des mesures de Tg.

L'échantillon est d'abord placé en isotherme à +25°C pendant 2 minutes puis refroidi à -150°C à une vitesse de 50°C par minute. Un isotherme est alors appliqué à -150°C pendant 10 minutes. Une première chauffe commence alors de -150°C à +10°C à la vitesse de 20°C par minute et se poursuit de 10°C à 250°C à la vitesse de 50°C par minute. L'échantillon subit alors une trempe pour atteindre -150°C à la vitesse maximum autorisée par l'appareil. L'échantillon est alors maintenu en isotherme à -150°C pendant 15 minutes. La deuxième chauffe commence alors de -150°C à +10°C à la vitesse de 20°C par minute (plage de mesure de la Tg de la partie élastomère du TPE) et se poursuit de +10°C à +250°C à la vitesse de 50°C par minute (plage de mesure de la Tg des blocs polyalphaméthylstyrène). Dans cette mesure seule la deuxième chauffe est exploitée.

### Méthode de mesure des propriétés dynamiques en déformation

Les propriétés dynamiques, modules complexes G*, sont mesurées sur un viscoanalyseur (Metravib DMA+ 450), selon la norme ASTM D 5992 - 96. On enregistre la réponse d'un échantillon de composition voulue (éprouvette cylindrique de 2 mm d'épaisseur et de 78 mm2 de section), soumis à une sollicitation sinusoïdale en cisaillement simple alterné, à la fréquence de 10Hz. On réalise un balayage de -80°C à +150°C à la vitesse de 1,5°/min à une contrainte de 0,7 MPa.

Les échantillons sont moulés à 180°C (diamètre 25mm, épaisseur 2mm) pendant 5 minutes, puis découpés à un diamètre de 10mm avec un emporte-pièce.

Le module complexe G*est mesuré.

L'objet des exemples est de vérifier la compatibilité et la sélectivité de certains plastifiants utilisés selon l'invention avec la phase élastomère de différents élastomères thermoplastiques.

Les élastomères thermoplastiques TPE1, TPE2 et TPE3 utilisés sont des copolymères triblocs linéaires présentant un enchaînement bloc thermoplastique polyalphaméthylstyrène/bloc élastomère styrène-butadiène/bloc thermoplastique polyalphaméthylstyrène. Le bloc dit bloc central est donc dans cette macrostructure le bloc élastomérique.

### Synthèse du TPE3 :

Dans un réacteur de 500 mL, on introduit 20 g de méthylcylohexane, 10 g d'alphaméthylstyrène et 1,25 mmol de tétrahydrofurfuryléthyléther. Après neutralisation des impuretés avec du n-butyl lithium, 0,25 mmol de s-butyl lithium sont introduits. Après 2 h 30 à T = 5 °C, la conversion en alphaméthylstyrène mesurée par extrait sec est de 70 %. L'analyse du polymère par chromatographie d'exclusion stérique montre la présence d'une population principale : Mn = 20 400 g/mol.

A l'issue de ces 2 h 30 à 5 °C, 2 g de butadiène sont introduits dans le réacteur puis deux minutes après cet ajout de butadiène, un mélange contenant 16,75 g de butadiène et 100 g de méthylcyclohexane dont les impuretés ont été préalablement neutralisées avec du n-butyl lithium est introduit dans le réacteur. Le milieu réactionnel est maintenu à 5 °C pendant 15 minutes. A l'issue de ces 15 minutes, la conversion en butadiène est de 83%.

0,12 mmol de diméthyldichlorosilane est ensuite introduit dans le réacteur. Le milieu réactionnel est maintenu à 5 °C pendant 30 minutes. Le polymère obtenu à l'issue de cette étape de couplage est un polymère tribloc poly(alphaméthylstyrène)-b-polybutadiène-b-poly(alphaméthylstyrène) qui présente une masse molaire par analyse SEC : Mn = 139 600 g/mol et 2 Tg mesurées par analyse DSC : 181 °C et -25 °C.

Les TPE1 et TPE2 sont préparés selon un procédé analogue.

Les structures des élastomères thermoplastiques utilisés selon l'invention et testés sont données dans les tableaux 1 et 1bis.

**Tableau 1**

| Nom·TPE¤ | %Bloc· Thermoplastique· (PAMS)¤ | %Bloc· Elastomère· (SBR)¤ | %STY·/·bloc· Elastomère¤ | %PB1·-·2··/· bloc· Elastomère¤ | %PB1·-4·/· bloc· Elastomère¤ |
|---|---|---|---|---|---|
| TPE1¤ | 26.6¤ | 73.4¤ | 7.9¤ | 76.9¤ | 15.20 |
| TPE2¤ | 30.4¤ | 69.6¤ | 0.7¤ | 87.8¤ | 11.6¤ |
| TPE3¤ | 23.9¤ | 76.1¤ | 0.8¤ | 80.1¤ | 19.1¤ |

**Tableau 1bis**

| **Nom TPE** | **Mn SEC (g/mol)** | **Ip SEC (g/mol)** | **Tg DSC bloc élastomère (°C)** | **Tg DSC bloc thermoplas tique (°C)** |
|---|---|---|---|---|
| **TPE1** | 113300 | 1.25 | -8 | 175 |
| **TPE2** | 132400 | 1.05 | -13 | 174 |
| **TPE3** | 139600 | 1.03 | -25 | 181 |

| | | | | |
|---|---|---|---|---|
| %Bloc Thermoplastique (PAMS) : % massique du bloc thermoplastique de polyalphaméthylstyrène dans le TPE %Bloc Elastomère (SBR) : % massique du bloc élastomère de SBR dans le TPE %STY / bloc Elastomère : % molaire de motifs styrène dans le bloc élastomère %PB 1-2 / bloc Elastomère : % molaire de motifs PB 1-2 dans le bloc élastomère %PB 1-4 / bloc Elastomère : % molaire de motifs PB 1-4 dans le bloc élastomère | | | | |

On prépare des compositions polymériques comprenant un élastomère thermoplastique et un plastifiant en solution. Dans un réacteur de 5L muni d'une pale d'agitation, 100g de TPE et 20g de plastifiant sont introduits pour une composition à 20pce de plastifiant. 2 litres de methylcyclohexane sont ajoutés et le tout est mis sous agitation pendant 12h. La solution est récupérée et séchée sous vide ou stripée à la vapeur d'eau pour éliminer le solvant.

Les plastifiants utilisés sont des oligomères de butadiène.

Les caractéristiques des plastifiants utilisés sont présentées dans le tableau 2.

Le tableau 2 bis présente leurs teneurs dans les compositions, les températures de transition vitreuse du bloc élastomère et des blocs thermoplastiques polyalphaméthylstyrène des élastomères thermoplastiques dans les compositions.

Enfin, le tableau 2 bis présente les modules complexes G* des compositions.

**Tableau 2**

| **Nom plastifiant** | **Mn plastifiant (g/mol)** | **Taux de PB1,2 (%)** |
|---|---|---|
| bdf 1,5k (1) | 1530 | 15.2 |
| bdf 2,7k (2) | 2700 | 12.9 |
| bdf 4,7k (3) | 4700 | 10.9 |
| bdf 10k (4) | 10000 | 7 |
| bdf 18k (5) | 18000 | 7.7 |
| bdf 47k (6) | 47000 | 7 |
| bdt 1,5k (7) | 1500 | 88 |
| bdt 3,2k (8) | 3200 | 80.4 |
| Ricon 130 (9) | 3400 | 22.9 |
| Ricon 150 (10) | 4300 | 42.1 |
| Ricon 156 (11) | 2000 | 50.3 |
| Ricon 184 (12) | 8600 | 26 |
| Polybutadiène 5k (13) | 5300 | 14 |
| Polybutadiène 150k (14) | 180000 | 4 |

| | | |
|---|---|---|
| (1)bdf 1,5k de la société PSS Polymer Standards Service GmbH (2)bdf 2,7k de la société PSS Polymer Standards Service GmbH (3)bdf 4,7k de la société PSS Polymer Standards Service GmbH (4)bdf 10k de la société PSS Polymer Standards Service GmbH (5)bdf 18k de la société PSS Polymer Standards Service GmbH (6)bdf 47k de la société PSS Polymer Standards Service GmbH (7)bdt 1,5k de la société PSS Polymer Standards Service GmbH (8)bdt 3,2k de la société PSS Polymer Standards Service GmbH (9)Ricon 130 de la société Cray Valley (10) Ricon150 de la société Cray Valley (11) Ricon 156 de la société Cray Valley (12) Ricon 184 de la société Cray Valley contenant entre 10 et 16% molaire de styrène (13) Polybutadiène 5k ayant une Mn de 5 300 g/mol, un Ip = 1,05, et présentant un pourcentage de PB 1,2 de 14% massique (14) Polybutadiène 150k ayant une Mn de 150 000 g/mol, un Ip = 1,9, et présentant un pourcentage de PB 1,2 de 4% massique, de PB1,4cis de 93% massique et de PB1,4trans de 3% massique Taux de PB 1,2 : taux molaire de motifs polybutadiène 1,2 dans le plastifiant | | |

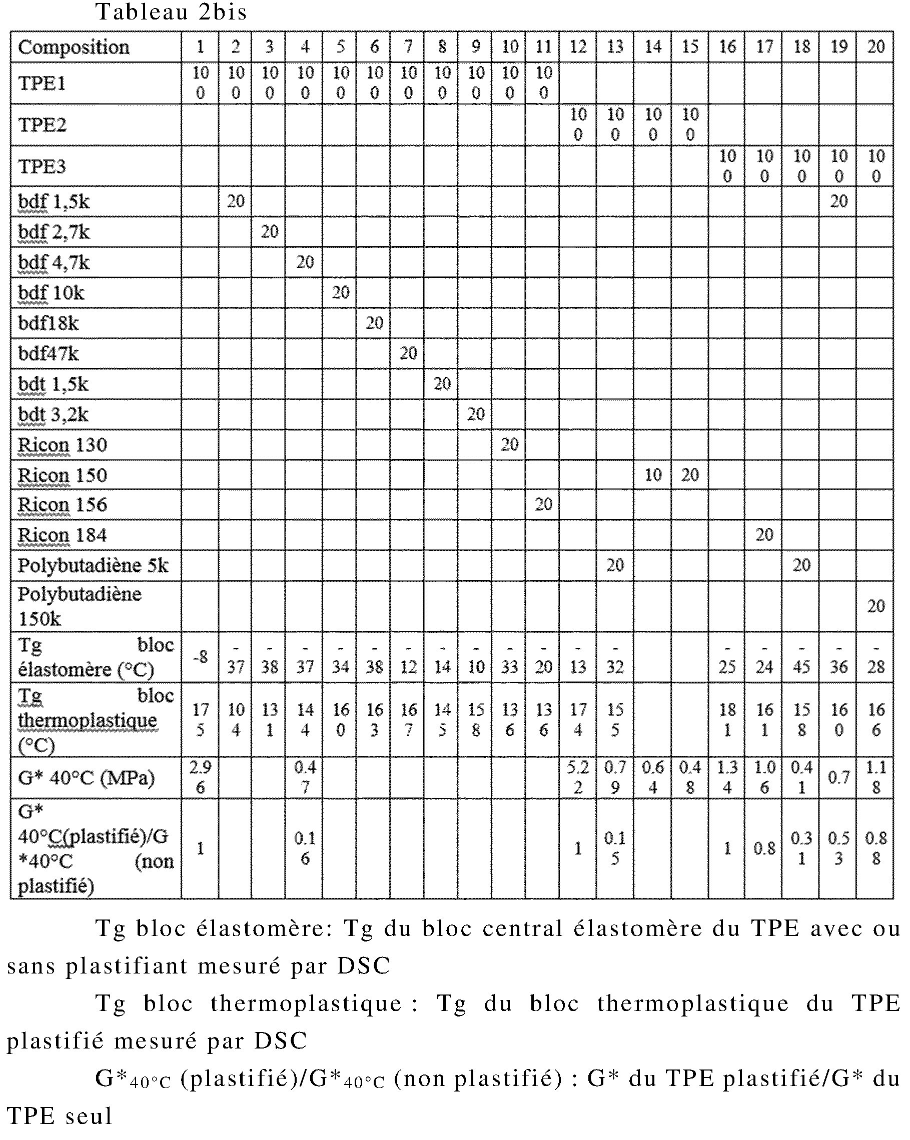

Le tableau 2bis montre que les plastifiants bdf 10k, bdf 18k, bdf47k, bdt 3,2k et polybutadiène 5k sont compatibles et sélectifs avec la phase élastomère car ils font baisser significativement la Tg du bloc central élastomère (ou à tout le moins le rapport Tg(bloc E TPE non plastifié - Tg(bloc E TPE plastifié)/( Tg(bloc E TPE non plastifié) - Tg(plastifiant)) est important) sans faire baisser de plus de 25°C la Tg des blocs thermoplastiques.

Par ailleurs, les modules complexes G* montrent une baisse de la rigidité sur les compositions mesurées, ce qui confirme que les plastifiants selon l'invention permettent bien d'ajuster la rigidité de la composition.

## Revendications

1. Composition polymérique comprenant
a) au moins un élastomère thermoplastique à blocs comprenant au moins un bloc élastomère et au moins un bloc thermoplastique, le ou les blocs élastomères comprenant majoritairement des unités issues du butadiène et comprenant en outre des unités issues d'un ou plusieurs monomères styréniques, le ou les blocs thermoplastiques étant constitués d'unités issues d'un ou plusieurs monomères styréniques,
b) au moins un plastifiant choisi parmi les oligomères de butadiène, étant entendu que :
b1) le taux molaire de motif polybutadiène 1,2 dans ledit plastifiant est compris dans un domaine allant de 70% à 130% du taux molaire de motif polybutadiène 1,2 dans le bloc élastomère de l'élastomère thermoplastique, et
la masse molaire Mn du plastifiant est supérieure à 2000 g/mol, et inférieure à 50000 g/mol, ou bien
b2) le taux molaire de motif polybutadiène 1,2 dans le plastifiant est inférieur à 70%, ou supérieur à 130% du taux molaire de motif polybutadiène 1,2 dans le bloc élastomère de l'élastomère thermoplastique, et
la masse molaire Mn du plastifiant est supérieure à 5000 g/mol, et inférieure à 50000g/mol.

2. Composition polymérique selon la revendication 1, **caractérisée en ce que** le ou les monomères styréniques du ou des blocs élastomères sont choisis parmi le styrène, l'o-, m- ou p-méthylstyrène, l'alpha-méthylstyrène, le beta-méthylstyrène, le 2,6-diméthylstyrène, le 2,4-diméthylstyrène, l'alpha-méthyl-o-méthylstyrène, l'alpha-méthyl-m-méthylstyrène, l'alpha-méthyl-p-méthylstyrène, le beta-méthyl-o-méthylstyrène, le beta-méthyl-m-méthylstyrène, le beta-méthyl-p-méthylstyrène, le 2,4,6-triméthylstyrène, l'alpha-méthyl-2,6-diméthylstyrène, l'alpha-méthyl-2,4-diméthylstyrène, le beta-méthyl-2,6-diméthylstyrène, le beta-méthyl-2,4-diméthylstyrène, l'o-, m- ou p-chlorostyrène, le 2,6-dichlorostyrène, le 2,4-dichlorostyrène, l'alpha-chloro-o-chlorostyrène, l'alpha-chloro-m-chlorostyrène, l'alpha-chloro-p-chlorostyrène, le beta-chloro-o-chlorostyrène, le beta-chloro-m-chlorostyrène, le beta-chloro-p-chlorostyrène, le 2,4,6-trichlorostyrène, l'alpha-chloro-2,6-dichlorostyrène, l'alpha-chloro-2,4-dichlorostyrène, le beta-chloro-2,6-dichlorostyrène, le beta-chloro-2,4-dichlorostyrène, l'o-, m- ou p-butylstyrène, l'o-, m- ou p-méthoxystyrène, l'o-, m- ou p-chlorométhylstyrène, l'o-, m- ou p-bromométhylstyrène, les dérivés styrènes substitués par un groupement silyle.

3. Composition polymérique selon la revendication 2 **caractérisée en ce que** le ou les monomères styréniques du ou des blocs élastomères sont choisis parmi le styrène et l'alphaméthylstyrène.

4. Composition polymérique selon l'une quelconque des revendications précédentes, **caractérisée en ce que** le ou les monomères styréniques du ou des blocs thermoplastiques sont choisis parmi le styrène, l'o-, m- ou p-méthylstyrène, l'alpha-méthylstyrène, le beta-méthylstyrène, le 2,6-diméthylstyrène, le 2,4-diméthylstyrène, l'alpha-méthyl-o-méthylstyrène, l'alpha-méthyl-m-méthylstyrène, l'alpha-méthyl-p-méthylstyrène, le beta-méthyl-o-méthylstyrène, le beta-méthyl-m-méthylstyrène, le beta-méthyl-p-méthylstyrène, le 2,4,6-triméthylstyrène, l'alpha-méthyl-2,6-diméthylstyrène, l'alpha-méthyl-2,4-diméthylstyrène, le beta-méthyl-2,6-diméthylstyrène, le beta-méthyl-2,4-diméthylstyrène, l'o-, m- ou p-chlorostyrène, le 2,6-dichlorostyrène, le 2,4-dichlorostyrène, l'alpha-chloro-o-chlorostyrène, l'alpha-chloro-m-chlorostyrène, l'alpha-chloro-p-chlorostyrène, le beta-chloro-o-chlorostyrène, le beta-chloro-m-chlorostyrène, le beta-chloro-p-chlorostyrène, le 2,4,6-trichlorostyrène, l'alpha-chloro-2,6-dichlorostyrène, l'alpha-chloro-2,4-dichlorostyrène, le beta-chloro-2,6-dichlorostyrène, le beta-chloro-2,4-dichlorostyrène, l'o-, m- ou p-butylstyrène, l'o-, m- ou p-méthoxystyrène, l'o-, m- ou p-chlorométhylstyrène, l'o-, m- ou p-bromométhylstyrène, les dérivés styrènes substitués par un groupement silyle.

5. Composition polymérique selon la revendication 4 **caractérisée en ce que** le ou les blocs thermoplastiques comprennent majoritairement des unités issues du monomère alpha-méthylstyrène.

6. Composition polymérique selon la revendication 5 **caractérisée en ce que** le ou les blocs thermoplastiques sont constitués d'unités issues du monomère alpha-méthylstyrène.

7. Composition polymérique selon l'une quelconque des revendications précédentes, **caractérisée en ce que** le ou les blocs thermoplastiques constitués d'unités issues d'un ou plusieurs monomères styréniques représentent au plus 35 %, de préférence de 10 à 35% en poids, par rapport au poids de l'élastomère thermoplastique.

8. Composition polymérique selon l'une quelconque des revendications précédentes **caractérisée en ce que** le ou lesdits plastifiants représentent de 5 à 50 pce, de préférence de 5 à 30 pce, mieux de 7 à 20 pce.

9. Pneumatique comprenant une composition polymérique telle que définie dans l'une quelconque des revendications précédentes.

## Patentansprüche

1. Polymerzusammensetzung, umfassend
a) mindestens ein thermoplastisches Blockelastomer, das mindestens einen elastomeren Block und mindestens einen thermoplastischen Block umfasst, wobei der elastomere Block bzw. die elastomeren Blöcke hauptsächlich Einheiten, die sich von Butadien ableiten, umfasst bzw. umfassen und außerdem Einheiten, die sich von einem oder mehreren Styrolmonomeren ableiten, umfasst bzw. umfassen, wobei der thermoplastische Block bzw. die thermoplastischen Blöcke aus Einheiten, die sich von einem oder mehreren Styrolmonomeren ableiten, besteht bzw. bestehen,
b) mindestens einen Weichmacher, der aus Butadien-Oligomeren ausgewählt ist, wobei es sich versteht, dass:
b1) der molare Gehalt von 1,2-Polybutadien-Einheiten in dem Weichmacher im Bereich von 70 % bis 130 % des molaren Gehalts von 1,2-Polybutadien-Einheiten in dem elastomeren Block des thermoplastischen Elastomers liegt und
die molare Masse Mn des Weichmachers größer als 2000 g/mol und kleiner als 50.000 g/mol ist oder auch
b2) der molare Gehalt von 1,2-Polybutadien-Einheiten in dem Weichmacher kleiner als 70 % oder größer als 130 % des molaren Gehalts von 1,2-Polybutadien-Einheiten in dem elastomeren Block des thermoplastischen Elastomers ist und
die molare Masse Mn des Weichmachers größer als 5000 g/mol und kleiner als 50.000 g/mol ist.

2. Polymerzusammensetzung nach Anspruch 1, **dadurch gekennzeichnet, dass** das Styrolmonomer bzw. die Styrolmonomere des elastomeren Blocks bzw. der elastomeren Blöcke aus Styrol, o-, m- oder p-Methylstyrol, alpha-Methylstyrol, beta-Methylstyrol, 2,6-Dimethylstyrol, 2,4-Dimethylstyrol, alpha-Methyl-o-methylstyrol, alpha-Methyl-m-methylstyrol, alpha-Methyl-p-methylstyrol, beta-Methyl-o-methylstyrol, beta-Methyl-m-methylstyrol, beta-Methyl-p-methylstyrol, 2,4,6-Trimethylstyrol, alpha-Methyl-2,6-dimethylstyrol, alpha-Methyl-2,4-dimethylstyrol, beta-Methyl-2,6-dimethylstyrol, beta-Methyl-2,4-dimethylstyrol, o-, m- oder p-Chlorstyrol, 2,6-Dichlorstyrol, 2,4-Dichlorstyrol, alpha-Chlor-o-chlorstyrol, alpha-Chlor-m-chlorstyrol, alpha-Chlor-p-chlorstyrol, beta-Chlor-o-chlorstyrol, beta-Chlor-m-chlorstyrol, beta-Chlor-p-chlorstyrol, 2,4,6-Trichlorstyrol, alpha-Chlor-2,6-dichlorstyrol, alpha-Chlor-2,4-dichlorstyrol, beta-Chlor-2,6-dichlorstyrol, beta-Chlor-2,4-dichlorstyrol, o-, m- oder p-Butylstyrol, o-, m- oder p-Methoxystyrol, o-, m- oder p-Chlormethylstyrol, o-, m- oder p-Brommethylstyrol und Styrolderivaten, die durch eine Silylgruppe substituiert sind, ausgewählt ist bzw. sind.

3. Polymerzusammensetzung nach Anspruch 2, **dadurch gekennzeichnet, dass** das Styrolmonomer bzw. die Styrolmonomere des elastomeren Blocks bzw. der elastomeren Blöcke aus Styrol und alpha-Methylstyrol ausgewählt ist bzw. sind.

4. Polymerzusammensetzung nach einem der vorhergehenden Ansprüche, **dadurch gekennzeichnet, dass** das Styrolmonomer bzw. die Styrolmonomere des thermoplastischen Blocks bzw. der thermoplastischen Blöcke aus Styrol, o-, m- oder p-Methylstyrol, alpha-Methylstyrol, beta-Methylstyrol, 2,6-Dimethylstyrol, 2,4-Dimethylstyrol, alpha-Methyl-o-methylstyrol, alpha-Methyl-m-methylstyrol, alpha-Methyl-p-methylstyrol, beta-Methyl-o-methylstyrol, beta-Methyl-m-methylstyrol, beta-Methyl-p-methylstyrol, 2,4,6-Trimethylstyrol, alpha-Methyl-2,6-dimethylstyrol, alpha-Methyl-2,4-dimethylstyrol, beta-Methyl-2,6-dimethylstyrol, beta-Methyl-2,4-dimethylstyrol, o-, m- oder p-Chlorstyrol, 2,6-Dichlorstyrol, 2,4-Dichlorstyrol, alpha-Chlor-o-chlorstyrol, alpha-Chlor-m-chlorstyrol, alpha-Chlor-p-chlorstyrol, beta-Chlor-o-chlorstyrol, beta-Chlor-m-chlorstyrol, beta-Chlor-p-chlorstyrol, 2,4,6-Trichlorstyrol, alpha-Chlor-2,6-dichlorstyrol, alpha-Chlor-2,4-dichlorstyrol, beta-Chlor-2,6-dichlorstyrol, beta-Chlor-2,4-dichlorstyrol, o-, m- oder p-Butylstyrol, o-, m- oder p-Methoxystyrol, o-, m- oder p-Chlormethylstyrol, o-, m- oder p-Brommethylstyrol und Styrolderivaten, die durch eine Silylgruppe substituiert sind, ausgewählt ist bzw. sind.

5. Polymerzusammensetzung nach Anspruch 4, **dadurch gekennzeichnet, dass** der thermoplastische Block bzw. die thermoplastischen Blöcke hauptsächlich Einheiten, die sich von dem alpha-Methylstyrol-Monomer ableiten, umfasst bzw. umfassen.

6. Polymerzusammensetzung nach Anspruch 5, **dadurch gekennzeichnet, dass** der thermoplastische Block bzw. die thermoplastischen Blöcke aus Einheiten, die sich von dem alpha-Methylstyrol-Monomer ableiten, besteht bzw. bestehen.

7. Polymerzusammensetzung nach einem der vorhergehenden Ansprüche, **dadurch gekennzeichnet, dass** der thermoplastische Block bzw. die thermoplastischen Blöcke, der bzw. die aus Einheiten, die sich von einem oder mehreren Styrolmonomeren ableiten, besteht bzw. bestehen, höchstens 35 Gew.-%, vorzugsweise 10 bis 35 Gew.-%, bezogen auf das Gewicht des thermoplastischen Elastomers, ausmacht bzw. ausmachen.

8. Polymerzusammensetzung nach einem der vorhergehenden Ansprüche, **dadurch gekennzeichnet, dass** der Weichmacher bzw. die Weichmacher 5 bis 50 phe, vorzugsweise 5 bis 30 phe, noch besser 7 bis 20 phe, der Zusammensetzung ausmachen.

9. Reifen, umfassend eine Polymerzusammensetzung gemäß einem der vorhergehenden Ansprüche.

## Claims

1. Polymer composition comprising
a) at least one block thermoplastic elastomer comprising at least one elastomer block and at least one thermoplastic block, the elastomer block(s) predominantly comprising units derived from butadiene and further comprise units derived from one or more styrene monomers, the thermoplastic block(s) consisting of units derived from one or more styrene monomers,
b) at least one plasticizer selected from butadiene oligomers, it being understood that:
b1) the molar content of 1,2-polybutadiene units in said plasticizer is within a range of from 70% to 130% of the molar content of 1,2-polybutadiene units in the elastomer block of the thermoplastic elastomer, and
the molar mass Mn of the plasticizer is greater than 2000 g/mol, and less than 50 000 g/mol,
or else
b2) the molar content of 1,2-polybutadiene units in the plasticizer is less than 70%, or greater than 130%, of the molar content of 1,2-polybutadiene units in the elastomer block of the thermoplastic elastomer, and
the molar mass Mn of the plasticizer is greater than 5000 g/mol, and less than 50 000 g/mol.

2. Polymer composition according to Claim 1, **characterized in that** the styrene monomer(s) of the elastomer block(s) are selected from styrene, o-, m- or p-methylstyrene, alpha-methylstyrene, beta-methylstyrene, 2,6-dimethylstyrene, 2,4-dimethylstyrene, alpha-methyl-o-methylstyrene, alpha-methyl-m-methylstyrene, alpha-methyl-p-methylstyrene, beta-methyl-o-methylstyrene, beta-methyl-m-methylstyrene, beta-methyl-p-methylstyrene, 2,4,6-trimethylstyrene, alpha-methyl-2,6-dimethylstyrene, alpha-methyl-2,4-dimethylstyrene, beta-methyl-2,6-dimethylstyrene, beta-methyl-2,4-dimethylstyrene, o-, m- or p-chlorostyrene, 2,6-dichlorostyrene, 2,4-dichlorostyrene, alpha-chloro-o-chlorostyrene, alpha-chloro-m-chlorostyrene, alpha-chloro-p-chlorostyrene, beta-chloro-o-chlorostyrene, beta-chloro-m-chlorostyrene, beta-chloro-p-chlorostyrene, 2,4,6-trichlorostyrene, alpha-chloro-2,6-dichlorostyrene, alpha-chloro-2,4-dichlorostyrene, beta-chloro-2,6-dichlorostyrene, beta-chloro-2,4-dichlorostyrene, o-, m- or p-butylstyrene, o-, m- or p-methoxystyrene, o-, m- or p-chloromethylstyrene, o-, m- or p-bromomethylstyrene, and styrene derivatives substituted with a silyl group.

3. Polymer composition according to Claim 2, **characterized in that** the styrene monomer(s) of the elastomer block(s) are selected from styrene and alpha-methylstyrene.

4. Polymer composition according to any one of the preceding claims, **characterized in that** the styrene monomer(s) of the thermoplastic block(s) are selected from styrene, o-, m- or p-methylstyrene, alpha-methylstyrene, beta-methylstyrene, 2,6-dimethylstyrene, 2,4-dimethylstyrene, alpha-methyl-o-methylstyrene, alpha-methyl-m-methylstyrene, alpha-methyl-p-methylstyrene, beta-methyl-o-methylstyrene, beta-methyl-m-methylstyrene, beta-methyl-p-methylstyrene, 2,4,6-trimethylstyrene, alpha-methyl-2,6-dimethylstyrene, alpha-methyl-2,4-dimethylstyrene, beta-methyl-2,6-dimethylstyrene, beta-methyl-2,4-dimethylstyrene, o-, m- or p-chlorostyrene, 2,6-dichlorostyrene, 2,4-dichlorostyrene, alpha-chloro-o-chlorostyrene, alpha-chloro-m-chlorostyrene, alpha-chloro-p-chlorostyrene, beta-chloro-o-chlorostyrene, beta-chloro-m-chlorostyrene, beta-chloro-p-chlorostyrene, 2,4,6-trichlorostyrene, alpha-chloro-2,6-dichlorostyrene, alpha-chloro-2,4-dichlorostyrene, beta-chloro-2,6-dichlorostyrene, beta-chloro-2,4-dichlorostyrene, o-, m- or p-butylstyrene, o-, m- or p-methoxystyrene, o-, m- or p-chloromethylstyrene, o-, m- or p-bromomethylstyrene, and styrene derivatives substituted with a silyl group.

5. Polymer composition according to Claim 4, **characterized in that** the thermoplastic block(s) predominantly comprise units derived from the alpha-methylstyrene monomer.

6. Polymer composition according to Claim 5, **characterized in that** the thermoplastic block(s) consist of units derived from the alpha-methylstyrene monomer.

7. Polymer composition according to any one of the preceding claims, **characterized in that** the thermoplastic block(s) consisting of units derived from one or more styrene monomers represent at most 35%, preferably from 10% to 35% by weight, relative to the weight of the thermoplastic elastomer.

8. Polymer composition according to any one of the preceding claims, **characterized in that** said plasticizer(s) represent from 5 to 50 phr, preferably from 5 to 30 phr, better still from 7 to 20 phr.

9. Tyre comprising a polymer composition as defined in any one of the preceding claims.
